# EUROPEAN PATENT APPLICATION

(11) **EP 1 014 672 A2**
(43) Date of publication of application: **28.06.2000**
(21) Application number: 99310549.3
(22) Date of filing: 23.12.1999
(51) Int. Cl.: H04M 15/00

(54) **Arrangement for billing or billing authorization using a calling card**

(30) Priority: 23.12.1998 US 219813; 05.08.1999 US 368932
(71) Applicant: NORTEL NETWORKS CORPORATION, Montreal, Quebec H2Y 3Y4 (CA)
(72) Inventor: Bouffard, Claude C., Chelsea, Québec J0X 1N0 (CA); Witte, Curt J., Chicago, IL 60611 (US)
(74) Representative: Bewley, Ewan Stuart

(57) **Abstract**

Authorizing a billing by a billing system of a telephone network, to a subscriber, for a service requested over the Internet, using a calling card. A line information database is accessed to obtain the telephone number corresponding to the calling card identifier, and the service is billed to that number. This puts existing telephone billing system and calling card infrastructure to a new use and provides a payment or authorization method that is easy to use and to deploy and bring to market on a large scale.

## Description

### RELATED APPLICATIONS

This application is a continuation in part of U.S. patent application, serial no. 09/219,813, filed 23 December 1998, entitled "Arrangement for billing or billing authorization using a telecommunication network", which is hereby incorporated by reference in its entirety.

### FIELD OF THE INVENTION

The invention relates to methods of authorizing a billing with the billing system of a telephone network, to methods of operating as an Internet service provider, to methods of using a billing system for a telephone network, to methods of operating an Internet site to offer a service that is billable, to methods of operating an Internet site offering a service that uses authentication by telephone network calling card, to methods of using an Internet based service, to methods of verifying identity of a user of an Internet based service, to corresponding apparatus for carrying out such methods, and to software and systems for carrying out such methods.

### BACKGROUND OF THE INVENTION

The use of data networks, such as the Internet, to access information and to advertise goods or services has gradually developed recently into E-Commerce, i.e. making sales of goods and services over the Internet. Various payment systems are known for customers to pay the retailer (hereinafter web merchant) for the goods or services they have ordered through the data network. Most popular are credit card based payment systems.

With such systems, either the user enters credit card details into a dialogue frame on his computer screen, or these details can be delivered by phone. In the former case there is exposure to fraud - either a security risk that the details can be intercepted, or that a user may misrepresent themselves using a false or stolen credit card number, or that the web merchant may intentionally or unintentionally be party to passing on the credit card details. The latter case, the phone solution, is more secure, but has some other problems. In many cases a home computer user will be occupying his only phone line to achieve Internet access. Further, at the web merchant, there needs to be a reliable link between the web-based order, and the phone-based payment. This may be complex to administer in ways that are not open to fraud. It also adds a cost element to the service, over and above the service cost, and embedded credit card fees - that of the telephony connection.

A more fundamental problem for some types of purchases is the price structure of credit card transactions which renders transactions involving small amounts of money uneconomical. When compounded by the risk potential for fraud, users and merchants alike are biased against subscribing to or using services which have a value below a threshold cost which can be as high as ten dollars. There are many potential web based services which fall into this category. For example, data providers may want to be able to charge small amounts for rights to small volumes of data, or charge per use, or for hourly, daily or weekly access.

It is also known to have subscription systems which involve pre-payment of. a fee. In such systems, the user is typically given a password, to enable access to the web merchant's web site. The user's IP(lnternet Protocol) address or other identifier can be used for further verification of a user. This arrangement is inconvenient for users who want to browse many different web sites, and can act as a deterrent to first time or impulse buying, to the dismay of web merchants.

A third known arrangement involves the use of digital tokens. A user pre-purchases a list of "magic numbers" or a mechanism to generate a set of such numbers, which are commonly referred to as "tokens". These tokens can be stored at a server or at the user's machine. The tokens can be used once to access a web site, then are disabled. Some advantages of these systems include the suitability for small value transactions, and the possibility of using the same type of tokens to pay for access to many different merchants' web sites. Tokens can also be purchased in different currencies. Another advantage is anonymity compared to credit card payment. Disadvantages include the fact that there are many different types of tokens offered, and each has a limited radius of service, as each web merchant or ISP (Internet Service Provider) needs to maintain specific software to accept a particular type of token. So far no one system is widely accepted, and there are too many parties involved to make agreement on one system likely. In any case, there is a further disadvantage that some form of prepayment is still required.

A fourth category of known arrangement is shown in US patent no. 5,745,556 to Ronen. In this case, a web merchant makes a "900" telephone number available to a user. To gain access to the merchant's web page, or to conclude a sale, the user must make the "900" call to the merchant's telephone number. This results in the telephone company (telco) making a charge to the user's telephone bill at a rate set by the merchant (the called party). A proportion of this money is passed to the merchant using the telco's existing billing systems.

A similar arrangement is shown in US patent no. 5,729,594 to Klingman. This reference shows using a "900" number to pay for on-line services without the need for further authentication of the buyer.

Also within this fourth category, Ronen shows an embodiment in his Figure 10 in which, instead of a call being made, the subscriber enters details and a password into a web page form which is passed to the telco and used to generate an item on the subscriber's telephone bill.

This fourth category has not become widely known or used. This may be partly because many subscribers do not have easy access to a second line to make the required call, and because it may be time consuming and cumbersome. The user has to use two systems and interfaces, and has to find and input the correct phone number. Also, the web merchant loses control of a crucial link at a crucial time in the buying process. The web merchant cannot actively assist in making the call, which may be particularly significant for high volume applications. If the subscriber finds the number busy, the sale may be lost, and the web merchant has no way of tracing why the sale was lost. Under heavier than engineered usage, it will be the telco, not the web-merchant that determines which subscribers will be unsuccessful making the connection. Short of considerable (expensive) over-provisioning of telephony access, there is no known way to ensure all telephony connections complete successfully.

In a further development of Ronen, U.S. patent 5,905,736 shows billing for transactions over the Internet. A billing platform receives details of the user's IP address together with the identity of the user, and stores them for future reference. When the web merchant provides a service to a user, the web merchant sends the cost and the IP address of the user to the billing platform. The billing platform can then identify the user from the IP address, and can charge the cost to the user's account. The user's account can be in the form of a credit card account, or a telephone billing account, for example.

It appears that sending a temporary address corresponding to a terminal on the network which is in reality an IP address of a terminal or any address by which a terminal would respond to messages or receive messages, could be unsafe if not encrypted. A malicious merchant could indeed inject messages containing some information regarding purchases corresponding to a consumer's account.

This application is also not very practical as the merchant, merchant host needs to have a business relationship with the Internet Access Provider and a Telephone company for billing services to a phone bill. Therefore, this technology limits the freedom of the merchant from choosing a host of its choice if the Internet Access Provider does not own such a relationship.

This method of billing is clearly limited to vertically integrated Internet Access Provider and Telephone Companies and forces web-hosting, portals and stand-alone merchant to comply with the business model put in place by this relationship.

In the case of a long distance carrier, this one could not obtain the ANI (automatic number identification) easily to properly identify the consumer dialing in to the Internet through his his local access provider therefore limiting the interexchange carriers from billing to their competitive long distance phone bill on a separate page from the local access provider phone bill.

Last, this method of billing could force consumers to stick with certain providers and their associated relationships for other services such as telecommunications, banking, etc therefore limiting the consumer's choice.

The calling card proposal definitely eliminates these restrictions and all telecommunications players, portals, isps, web-hosting, clecs, ixcs and stand-alone merchants can take advantage of it independently of these relationships.

The calling card can also be part of all ewallets the same way that credit cards are in today's internet ecommerce site.

As used herein, the term "telephone network" is intended to encompass for example IP telephony networks, other networks arranged for transmitting calls, the public switched telephony network, a wireless network, a private carrier voice network, an enterprise-wide voice network, a virtual private telephone network, a telephone network provided to subscribers over cable TV or powerline infrastructure, and so on.

As used herein, the term "subscriber" is intended to encompass a person subscribing, a group of persons subscribing jointly, such as the employees of a company, and an agent (human or automated) of any of the above, arranged to accept calls on behalf of the person or group.

As used herein, the term "service" is intended to encompass providing access to data, whether the data is accessed or not. It is also intended to encompass services such as sale of goods, e.g. by mail order, and sale of any sort of services including those not provided over the data network. An example is household maintenance services.

As used herein, the term "web merchant" is intended to encompass also agents of the web merchant (human or automated) such as a calling service contracted to the web merchant for making calls on behalf of the web merchant. It is also intended to encompass e-commerce traders, and non trading entities such as charities, security services, political movements or educational establishments which may have a presence on the Internet, and may want to accept payments or perform authorizations or any sort of third party service.

### SUMMARY OF THE INVENTION

According to a first aspect of the invention, there is provided a method of authorizing a billing by the billing system of a telephone network, to an account of a subscriber of the telephone network, for a third party service requested by a user over a data network, such as the Internet, comprising the steps of:
a) receiving an identifier of a calling card of the user,
b) accessing a database of correspondences between telephone numbers and calling card identifiers, to obtain the telephone number corresponding to the calling card identifier,
c) causing the third party service to be billed by the billing system of the telephone network to the subscriber corresponding to the telephone number.

This goes beyond the known uses of calling cards, but has significant benefits. Telephone billing systems are tried and trusted and already in place. Calling cards are easy to use and already in the hands of many millions of users. The communications and database systems needed for verifying the PINs (Personal Identification Number) for calling cards are also secure, tried and tested. Putting this existing infrastructure to a new use to pay for services requested over data networks such as the Internet can provide a payment method which is easier to use and easier to deploy and bring to market on a large scale than the known solutions referred to above.

The known use of calling cards is to pay for telephone calls. According to the known use, the identity of the user is confirmed by using a non-secure card number, and a secret PIN (Personal Identification Number). The PIN and the card number are sent to a central secure database for obtaining billing authorization, by verifying there is an entry corresponding to the combination of the card number and its associated PIN. If there is an entry, it will include the telephone number to be billed, which can be sent to the telephone network billing system.

An advantage of using telephone network billing systems for Internet services, compared to credit cards, is that telephone network billing systems were designed for small value transactions. Unlike credit cards, wherein the cost of processing individual credit card transactions can make it uneconomic for the merchant for transactions below a few dollars in value, telephone network billing systems are designed to process such small value transactions, since most phone calls are short enough to be of low dollar value.

Using a calling card to authorize a billing is advantageous because it is a convenient, widely used and well trusted mechanism for enabling phone calls made from any phone line away from the subscriber's own line, to be billed to the subscriber's telephone bill. Compared to the known proposals to use the 1-900 number premium rate calls to pay for services, calling cards have the advantage that they make use of existing phone numbers for merchants and customers. Also calling cards do not need to tie up call-handling bandwidth on the telephone network, as the authorization can make use of the signaling network only, in the known manner.

The use of a calling card with the associated PIN may provide enough security against fraud for some applications, without the need for elaborate and expensive further measures. Where further security is warranted, or as an alternative to the use of the PIN, an authorization call can be made back to the subscriber, as described in the above referenced continuation-in-part patent application, incorporated herein by reference.

The use of a calling card can also address the disadvantages of the prior known methods of authorization as set out above. Compared to 1-900 schemes, it is easier to handle large scale operations. In the event of congestion caused by many subscribers desiring access to the same web merchant at the same time, the web merchant can control the response, e.g. service the subscribers in order of receipt of their requests or according to any other scheme of their choosing. The web merchant can then reduce the degree to which telecommunications facilities need to be over-provisioned and reduce operating costs. It is easier for the web merchant to deal with high volumes of business by arranging for agents to handle authorization requests, to deal with any overflow, and thus avoid missing any business, than would be the case with a 1-900 based scheme. Even a telco running the network could act as an agent on behalf of the web merchant to make authorization connections.

Another advantage is that in some circumstances, e.g. where the subscriber's phone line is being used for accessing the web merchant over the Internet, the present invention can enable the subscriber to use the services without needing a second phone line to make an authorizing connection.

Another advantage is that the present invention enables telemarketing of services to be combined with authorization of payment for the service in the same connection.

A consequence of the present invention allowing use of an existing billing system of a telephone network for effecting payments is that it becomes more economical to levy many small charges for high volumes of small transactions. There are presently billions of dollars invested in sophisticated billing systems, and there exist complex agreements between telephone networks, to enable billions of calls to be charged to subscribers, and distribute revenues between the hundreds of network providers. It is therefore advantageous to leverage this existing infrastructure to perform billing for services such as web-based services or E-commerce in general. This applies particularly to services such as news or other information services which subscribers may want to browse, but not pre-pay for. The already rapid rate of growth of such service offerings may be increased dramatically if such services can now be charged for more easily.

Preferably, the database of correspondence is a line information database accessible over a signaling network of the telephone network. An advantage of this is that it makes use of existing infrastructure used for processing of calls made using calling cards.

Preferably, the above-mentioned method further comprises the step of determining if the calling card identifier is associated with a proprietary database of correspondences, and if so, the step of accessing the database comprises the step of accessing the associated proprietary database.

An advantage of being able to authorize billing based on proprietary calling cards is that such cards are already in widespread use, and so this method of billing is easier to introduce, and can be more attractive to web merchants. The proprietary calling card databases were introduced to tighten competition in the North American long distance carrier market, and distinguish the carriers from the local access providers.

Preferably, the method further comprises the step of receiving a secure identifier, and the step of accessing the database comprises the step of using the secure identifier and the calling card identifier to obtain the telephone number which can reduce the risk of fraud.

Preferably, the method further comprises the steps of recording the calling card identifier, the billed number and associated telephone company information such as the revenue accounting office, etc ...at the billing server site.

Preferably, the method further comprises the steps of recording the calling card identifier, and using the recorded calling card identifier for authorizing a subsequent request by the same user for a service without the user needing to reenter the calling card identifier at the merchant site.

Preferably, the method further comprises the steps of recording an encrypted IP address of the user at the merchant site, and employing the recorded IP address for authorizing a subsequent request by the same user for a service without the user needing to reenter the calling card identifier to prevent fraud and reduce consumer friction right at the merchant's site.

Preferably, the method further comprises the steps of recording an encrypted calling card identifier of the user at the merchant site, and employing the recorded identifier for verifying against a stored calling card identifier in the consumer's browser for a subsequent request by the same user for a service without the user needing to reenter the calling card identifier to prevent fraud and reduce consumer friction right at the merchant's site.

Preferably, the method further comprises the steps of recording an encrypted calling card identifier of the user at the merchant site along with an encrypted IP address when a consumer was authenticated on a different site.

Preferably, the method further comprises the steps of recording the calling card identifier, the billed number and associated telephone company information such as the revenue accounting office, etc ... and a transaction key at the billing server site.

Preferably, the method further comprises the steps of recording an encrypted transaction key inside the consumer's browser corresponding to the authentication of the consumer's calling card.

Preferably, the method further comprises the steps of recording an encrypted transaction key inside the consumer's browser corresponding to the authentication of the consumer's calling card billed number and the billing information at the billing server and merchant site.

Preferably, the method of ensuring that the consumer purchase is performed from an authenticated consumer is performed by retrieving the consumer's key from the browser to access the consumer's identity inside the merchant software.

Preferably, the method of purchasing at a merchant site is comprised of retrieving the consumer's identity from the merchant's software and securely passing it along to the billing system to record the transaction along with the purchase information containing information such as the merchant name, item name, quantity and other well known information required in electronic commerce against the consumer's authentication account.

Preferably, the method consists in passing this key back to the merchant software to produce an entry inside the merchant web server containing an encrypted version of the consumer's IP address and the transaction key itself.

Preferably, the method of ensuring that the consumer purchase is performed from an authenticated consumer is performed by checking the IP address recorded inside the merchant software as well as the IP address contained in the consumer's browser along with the transaction key.

Preferably, the method of purchasing at a merchant site is comprised of retrieving this key from the merchant software and securely passing it along to the billing system to record the transaction along with the purchase information.

Preferably, this information is received by the billing system and a record is produced containing the purchase information as well as the corresponding key.

Preferably, the purchase record is associated with the authentication record by means of the key to bill the consumer appropriately through the billed number recorded in the authentication record.

Preferably, the key is partly modified after each purchase and updated in the merchant software, but still corresponds to the consumer's browser's key to prevent malicious reuse.

Preferably, the method of producing the billing record verifies the modified key on every purchase to ensure that the same key is not reused maliciously.

Preferably, the merchant is notified of the success of the transaction after each purchase.

Preferably, the authorization of billing for the service can be limited to a specified duration or specified value.

Preferably, the step of causing the service to be billed comprises the step of sending an indication of the authorization to the web merchant. This can be encrypted or otherwise secured as appropriate, particularly if the web merchant then passes the indication of authorization on to the billing system, or if the web merchant only grants access to a user after successful authorization. Alternatively, the web merchant could use the authorization passively, in the sense of granting access to any consumer until the web merchant receives an indication of a failed authorization request. This can be appropriate to enable faster access for consumers, and simpler or higher volume processing by the web merchant, if only small amounts of revenue would be lost by the inability to bill those consumers whose authorization request failed.

Preferably, the step of causing the service to be billed comprises the step of sending an indication of the authorization to the billing system.

Preferably, the billing amount is determined according to input from a web merchant responsible for providing the service which allows a wider or more flexible range of services as the amount billed can be set accordingly.

Preferably, the billing amount is determined according to input from the subscriber which allows the introduction of more complex services with more options, or which allows negotiations on price and/or service to be introduced.

Preferably, the authorization can be in respect of a billing amount that is a credit which again enables a wider range of services. These services can include those that the web merchant desires from the subscriber, and is willing to pay for. For example, subscribers can be paid small amounts for completing on-line consumer surveys, or for receiving specific advertising. Gambling winnings payments, contract or salary payments, and refunds of earlier payments can also be made.

Preferably, the method further comprises the step of passing the authorized billing amount to a billing system of the network. This can be carried out by the network or by the web merchant or both. It can be carried out automatically, by the network, using information transmitted over the connection. Alternatively it can be carried out by a second connection made by the web merchant to the network or to the billing system directly. Such a connection can be made over a data network, or over signaling channels of a voice network without needing a voice channel to be set up.

A further aspect of the invention provides a method of operating as an Internet service provider, web-host or portal for Internet users and merchants, and carrying out the billing authorization method as set out above in respect of services requested by the users on the behalf of both the merchant and the consumer.

A further aspect of the invention provides a method of using a billing system for a telephone network, for billing a subscriber to the telephone network, the billing relating to a service provided by a third party web merchant coupled to the network.

A further aspect of the invention provides a method of operating an Internet site to offer a service that is billable to a subscriber of a telephone network using a calling card of the subscriber, the telephone network having an associated billing system, the calling card being associated with a calling card database.

By enabling the third party web merchant to use the existing billing infrastructure, billing is simplified for web merchants and less costly compared to other known billing methods, which can be particularly significant for billing small amounts. For the telephone network (or other utility), there is the benefit of being able to charge for use of the billing system, whether or not a connection is made over the network (or the utility is used) and thereby getting more return from the heavy investment already made in the billing system.

Another aspect of the invention provides a method of operating an Internet site offering a service that uses authentication by calling card.

Another aspect of the invention provides a method of verifying identity of a user of an Internet based service, for a provider of the service, based on calling card information.

The present invention provides an easy way of identifying or authenticating a user in a way that makes use of existing infrastructure. This can be applied to more than billing, and can be used to restrict access to sensitive information, or to limit the duration of access by each user to a free service, for example. The reuse of the existing infrastructure means there is no need to build another set of infrastructure for issuing cards, keeping a secure database of PINs and so on. Whether or not the user is billed, the web merchant can easily be billed by the telephone network billing system for making use of the verification system, if the web merchant is or becomes a subscriber to the telephone network (with or without telephone service).

Further aspects of the invention provide corresponding methods of requesting such services by subscribers, corresponding apparatus for carrying out any of the above methods, and software for carrying out any of the above methods.

Any of the preferred features may be combined with any of the aspects set out above as would be apparent to a skilled person.

Other advantages will be apparent to a skilled person, particularly in relation to any further prior art other than that discussed above.

### BRIEF DESCRIPTION OF THE DRAWINGS

Preferred embodiments of the present invention will now be described, by way of example only, with reference to the attached Figures, wherein:
Figure 1 shows a sequence diagram of an embodiment of the invention;
Figure 2 shows a sequence chart showing a further embodiment of the invention;
Figure 3 shows a sequence chart of a further embodiment of the invention including the feature of depositing a cookie on the user's computer or adding information in the authentication header of the user's browsers.
Figure 4 shows in schematic form hardware elements and inter-connections according to a further embodiment of the invention;
Figure 5 shows a sequence diagram of the operation of an embodiment of the invention using the hardware arrangement shown in figure 4; and
Figure 6 shows a sequence chart of a further embodiment of the invention involving a verification method using calling card information.

### DETAILED DESCRIPTION OF THE INVENTION

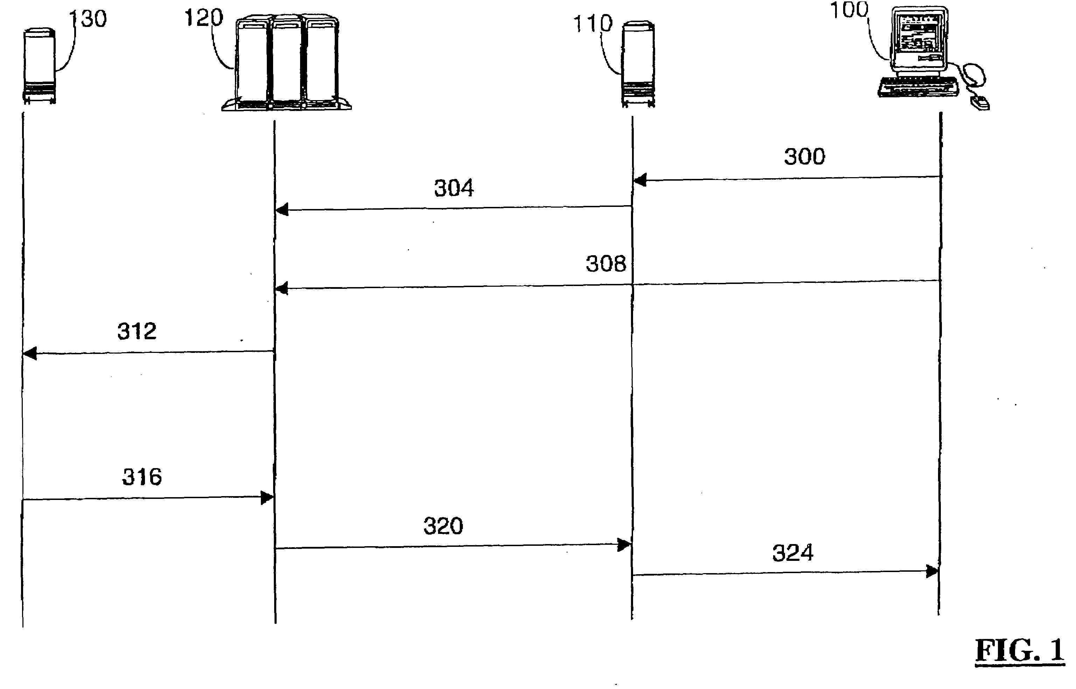

Figure 1 shows a sequence chart including functions performed by a user's personal computer (PC) 100, which is connected to a data communication network, such as the Internet, to access a website of a web merchant, located on a host computer 110. In the following discussion, the preferred data communication network is the Internet, but the present invention is not so limited and it is contemplated that the present invention can be usefully employed with a wide range of data communication networks.

Also shown in Figure 1 is an authorization server 120, coupled to the data communication network and to a calling card database 130. Calling card database 130 can be proprietary, or can be a line information database (LIDB), accessible over the signaling network of the PSTN (public service telephone network). LIDB's and use of the signaling network of the PSTN are known.

At 300, a user requests a service which is Internet based, i.e. - it involves either a request over the Internet, or a service provided over the Internet from a website, or both. Conventionally, the user would need to access the Internet via an ISP (Internet service provider), which is not shown in Figure 1, for the sake of clarity. This ISP functions to provide the user with access to the Internet and is not to be confused with the web site of the web merchant.

The web merchant requests authorization at 304 of the user from the authorization server 120. The authorization server obtains details of the user's calling card, either directly from the user at 308, or via some intermediary, possibly the user's ISP, or from the web site of this provider.

The authorization server then sends, at 312, the calling card identifier to calling card database 130, which at 316 returns an indication of the corresponding telephone number, or dialing number (DN). If there is a corresponding DN in the database, then this enables the authorization server to initiate billing at 320 for the service, to the telephone bill of the DN associated with the calling card and the service is provided at 324.

If fraud is a particular concern, it can be addressed in various ways. The calling card identifier can be encrypted by the user's PC 100, and decrypted by authorization server 120. The system could require pre-registration by a user, or other information about the user could be obtained, and correlated with the calling card identifier. One of the most straightforward ways is to employ the PIN, which is usually used with the calling card when making a telephone call.

Authorization server 120 can initiate billing by communicating with the telephone network billing system over a secure link, for example the signaling system of the PSTN. Furthermore, authorization server 120 can be arranged to initiate the billing by sending an authorization to the web merchant, which could then, in turn, communicate directly with the telephone network billing system if security concerns have been addressed. The web merchant can provide the amount to be billed either at the time of authorization or at a later time, for example for a pay per use application. The web merchant can provide the amount to be billed directly to the billing system, or to the authorization system which will pass it on to the billing system. The billing system or authorization system may require some verification of the web merchant's credentials or trustworthiness, before billing subscribers, or agreeing to credit the web merchant.

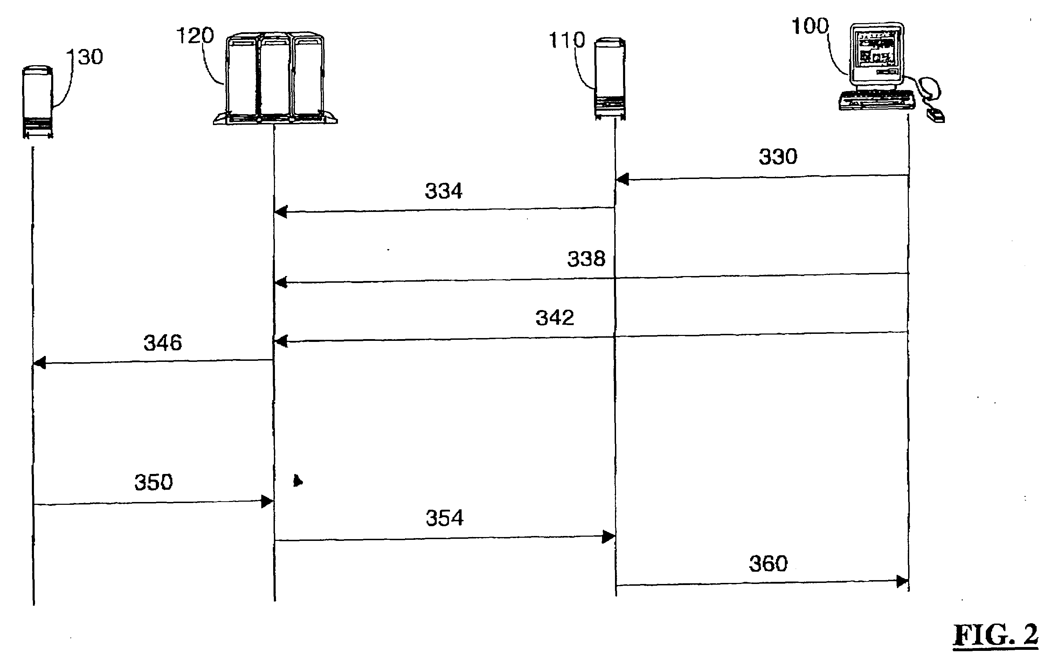

Figure 2 shows a sequence chart of another embodiment, showing the same arrangement of system hardware as in Figure 1. In Figure 2, a user requests a service at 330 via the Internet, and a request for authorization is sent at 334 by web merchant 110 over a secure link to authorization server 120. In this embodiment, authorization server 120 obtains the telephone number of the user at 338, as well as the calling card number and PIN at 342 and this information is forwarded to calling card database 130 at 346. At 350, authorization server 120 obtains the billing telephone number which corresponds to the calling card number and the PIN, if the correct PIN is given. Authorization server can, at 354, carry out its own verification of the billing number returned by the calling card database, with the telephone number supplied by the user and initiate billing and to provide the service at 360. This provides a further level of security against fraud, before authorization server 120 will initiate billing and indicate to the web merchant that the authorization was successful.

The web merchant can be given the option of proceeding upon receipt of a positive indication of authorization from authorization server 120, or it can be arranged to provide the service at 360 to the user unless it receives an indication that the authorization was unsuccessful.

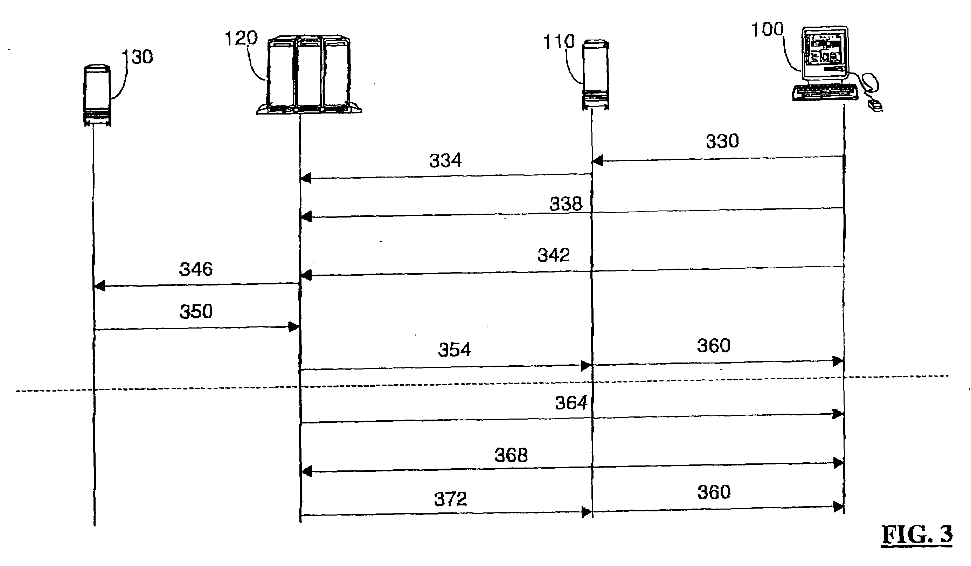

In Figure 3, a further embodiment is shown, again using the same arrangement of system hardware as shown in Figures 1 and 2. In this embodiment, steps 330 through 360 are similar to those shown in Figure 2. Specifically, the process proceeds as described above until authorization server 120 initiates the billing and authorizes the service at steps 354 and 360. At this point, to enable the user to avoid re-entering the same calling card information and DN information in subsequent service sessions, a record of the successful authorization is recorded so that it can be reused. The manner of creating and maintaining a record of the successful authorization is not particularly limited and can include the deposit of an encrypted cookie on the user's computer at 364. The deposit and use of cookies is a well known mechanism, which need not be described here in more detail. Other contemplated techniques include personal certificates or any other encrypted or non-encrypted data storage at user PC 100, or at the ISP or at authorization server 120.

Upon a subsequent request for service from the same user, either for the same service, or for a different service at a different website, the authorization server can attempt to recover the encrypted cookie from the user's computer at 368.

This step is performed instead of steps 338 and 342. If the user's computer does have an encrypted cookie, and if it can be decrypted by authorization server 120 and, if still valid, then authorization server 120 can authorize the service and initiate billing at step 372 and provide the service at 360, as before.

It is contemplated that cookies can be arranged to be valid for a predefined duration, or for a predefined range of websites, or to authorize billing up to a predefined amount of money, for example.

The encrypted cookie stored on user PC 100 can record just the calling card number, or can record other information such as the PIN number, the user's IP address and domain name, or the user's telephone number, for example. The same information can be held by the user's ISP. If the user's IP address changes, e.g. because the user logs on again to the Internet and is issued with a different IP address, or if the user's domain name changes, then the user can be prompted to re-enter the PIN.

If the PIN is entered incorrectly, access to the website or the service may be denied, and the cookie may be erased or invalidated. Furthermore, if repeated attempts are made using the wrong PIN, then authorization server 120 or calling card database 130 can be arranged to prevent any future use of that calling card, to reduce fraud.

In Figures 1, 2 and 3 only one user and one web merchant is shown. In practice, there will be a large number of users, limited only by the capacity of the data network. One authorization server 120 can serve many websites 110 of web merchants. There can also be many authorization servers 120, to supply sufficient processing power to meet demand, without introducing undue delays. Also, there may be numerous calling card databases 130, each serving a different proprietary calling card.

If proprietary calling cards and corresponding proprietary calling card database are operated by long distance carrier telephone companies, they can have carrier codes. These codes can be dialed by users ahead of a normal dialing number, to ensure the call is routed over that carrier's network. The same codes, or similar ones, can be used as a prefix to the calling card information, to enable an authorization server 120 to recognize which calling card database 130 is to be used.

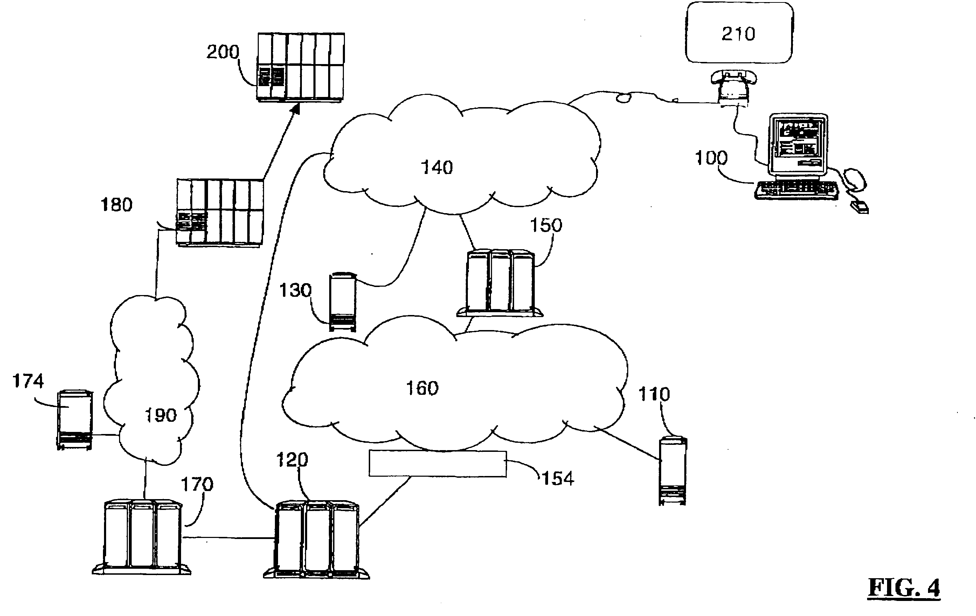

Figure 4 illustrates in schematic form more details of the system hardware. The elements shown in Figures 1, 2 and 3 are also shown here in Figure 4. The user's PC 100 is connected to the Internet 160 via a modem link which passes through the PSTN 140. The user's ISP 150 is illustrated, linking the user to Internet 160. The computer 110 hosting the website of the web merchant is also shown linked to Internet 160. Authorization server 120 is linked to Internet via a firewall 154. Firewall 154 employs any suitable security technology, as will be apparent to those of skill in the art, and need not be described here in more detail. Firewall 154 serves to restrict access to authorization server 120, and monitor the access, to insulate authorization server 120 from overload, fraudulent access or other problems. Authorization server 120 is coupled to the calling card database 130 through PSTN 140. Alternatively, authorization server 120 can be combined with the user's ISP 150 by making suitable modifications to the ISP, as ISP 150 already has links to Internet 160, and to the PSTN 140.

There can be multiple calling card databases 130, to accommodate different proprietary calling cards. In this case, authorization server 120 needs to be able to identify which database is appropriate, based on the calling card number. Alternatively, authorization server 120 can be arranged to try a series of different calling card databases 130 sequentially, until it finds one with an entry for the given calling card number.

To initiate billing, authorization server 120 is shown connected to a switch 170, which can be part of PSTN 140, or can be provided as a dedicated interface to the Telco billing system 180. A suitable switch can be one of the well known DMS switches, sold by of Nortel Networks Corporation of Brampton, Ontario, Canada.

Switch 170 is connected to a reliable file server 174 for downloading the AMA records from the switch to a remote platform, typically file server 174. From there the telco can move the records to their existing downstream billing system by a suitable data transfer mechanism, such as FTP (File Transfer Protocol). In the illustrated embodiment, reliable file server 174 has been implemented in an OAM platform, in the form of a SuperNode Data Manager (SDM) produced by Nortel Networks. Switch 170, the reliable file server 174 and the Telco billing system 180 are coupled by an intranet 190, with appropriate security measures, so that billing information can be passed securely therebetween.

Telco billing system 180 also communicates with a calling card administration system 200. Again, there can be multiple such admin systems, one for each different proprietary calling card. Calling card administration system 200 is responsible for issuing calling cards 210 to users, and for performing appropriate billing reconciliation, to ensure that calls made by a user from a distant telephone network are billed to the user by the Telco to which he is a subscriber. Also, the distant telephone network operator must be given a credit for such a call and this is accomplished by calling card administration system 200 in a known manner.

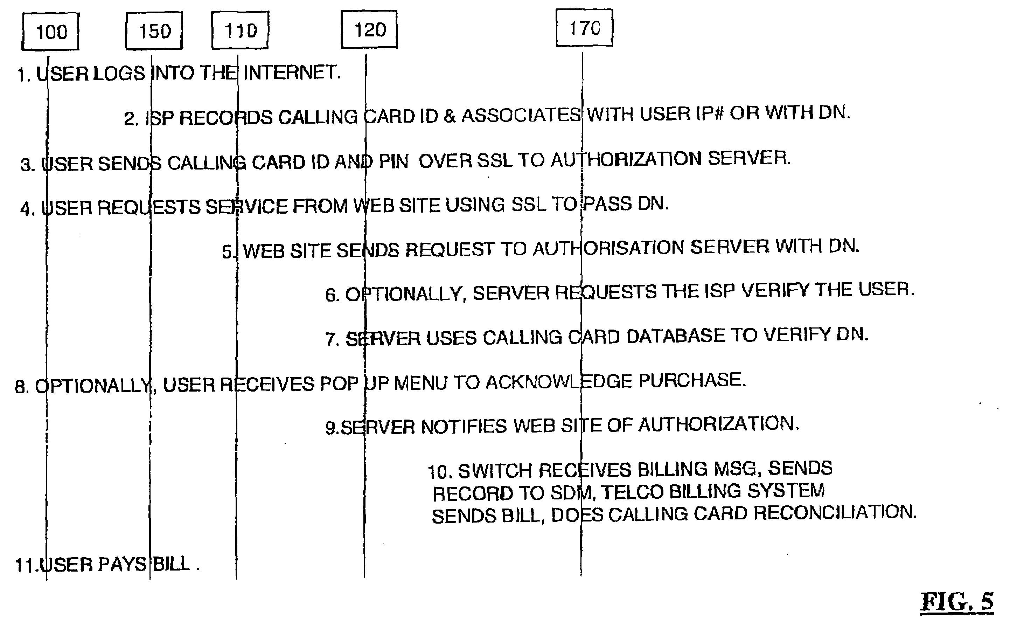

All of the components of the infrastructure shown in Figure 4, with the exception of authorization server 120, exist already for handling calls, for handling calling cards, and for handling Internet traffic. To achieve the functions that will now be described below with respect to Figure 5, new software is required to be installed at each ISP 150, at websites 110 of web merchants, at authorization server 120 and at switch 170. Otherwise, the functions can make use of hardware and software infrastructure that is already in place.

Mechanisms for passing information securely over the web are well known and need not be described herein in more detail. They include SSL (Secure socket layer), personal certificates, digital envelopes and other techniques. Java and Java scripts can be used on the client or server side. Standard TCP/IP can be used in communicating with the web merchant. The communication with calling card server database 130 can use SS7 and/or TCP/IP. Intranet 190 can be protected with policy management using known encryption and authentication technology.

Figure 5 shows a sequence chart with the functions of some of the principle elements shown in Figure 4, according to another embodiment of the invention. As shown in Figure 5, user 100 logs on to the Internet via their ISP 150 at step 1. ISP 150 then, at step 2, records a calling card identifier entered by user 100 at the time of logging on, or at the time of accessing a desired service. ISP 150 records other information identifying the user, such as their DN, or IP address, or both.

As shown at step 3, user 100 sends their calling card ID and PIN to authorization server 120 over a secure link such as SSL (secure socket layer). ISP 150 or the browser software on user's PC 100 can be set up to contact authorization server 120 on login.

At step 4, after a conventional login routine, user 100 can request a service from a website 110 which requires access or billing using the calling card. The request for authorization can come from website 100, as shown in step 5, or optionally can come directly from user 100. Website 110 needs to send the user's DN to authorization server 120. Website 110 can obtain the DN of user 100 from ISP 150 of the user 100, or by prompting user 100 to enter the information through a pop-up window. Alternatively, website 110 can the DN independently from on-line telephone directories, based on the name and address details of user 100.

Optionally, as shown in step 6, authorization server 120 requests that the identity of user 100 be verified by ISP 150 of user 100. This can enable authorization server 120 to ensure that any information supplied directly from user 100 matches information that ISP 150 has stored about user 100.

At step 7, authorization server 120 uses calling card database 130 to verify the DN provided by user 100 or ISP 150. This step has been described above with respect to Figures 1 to 3. Optionally, as shown in step 8, user 100 is sent a pop-up window by authorization server 120, to enable user 100 to acknowledge the purchase, or to supply more details, such as amounts or duration, or spending limits. This step of obtaining the confirmation of user 100 can be carried out by sending a voice call to DN of user 100, or to another DN associated with user 100. This is described in more detail in the above-referenced parent application.

At step 9, authorization server 120 notifies website 110 of the successful authorization and any details obtained from the acknowledgement by user 100. Authorization server 120 can then initiate the billing, or wait until the service has been used and obtain an indication from website 110 as to the amount which should be billed. Optionally this information can be sent to user 100 at the time of requesting acknowledgement of the purchase, as appropriate. At step 10, switch 170 initiates the billing by sending a billing message to the switch. The switch converts this into the conventional AMA (automated message accounting) format which is recognized by existing telephone network billing systems. The switch could be a dedicated device, or could be a device also used for switching communications traffic in the network.

The AMA records are sent over the intranet 190 to file server 174. Billing system 180 will periodically, for example each month, prepare bills in paper or in the future in electronic format, for each subscriber, by retrieving the appropriate AMA records from file server 174. User 100 pays bills to the telephone company, and the revenue is shared as appropriate by agreements between telephone operating companies.

As mentioned above, there is also a calling card reconciliation system 200, administered by the companies which operate and issue the calling cards 210. Calling card reconciliation system 200 is well known and need not be described in more detail here. Billing system 180 will communicate with calling card reconciliation system 200 to assure distribution of revenue as appropriate.

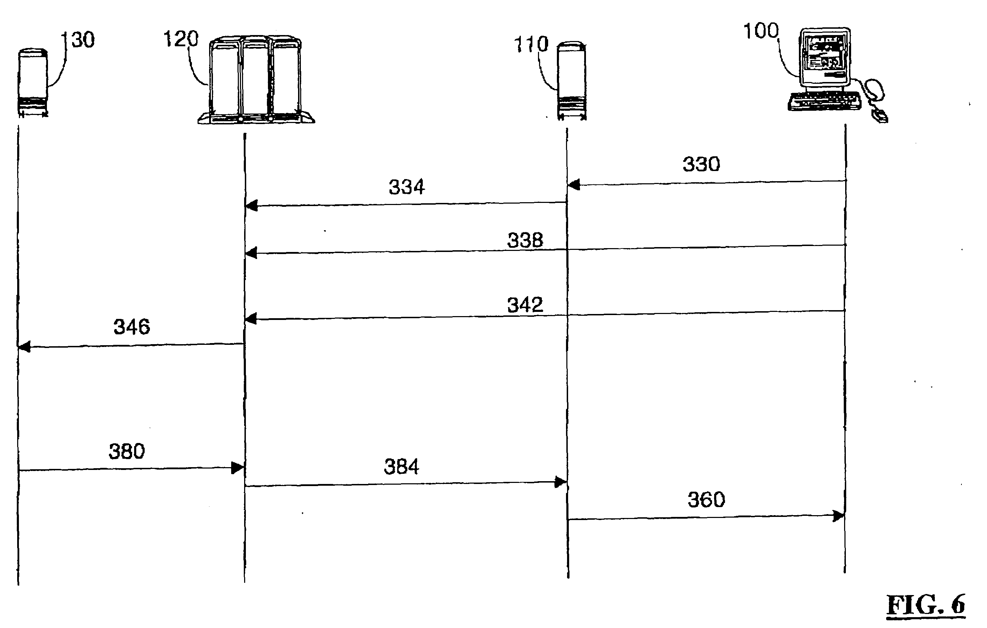

In Figure 6, there is shown a sequence diagram of a further embodiment making use of the calling card database for verification. The Figure shows the same system hardware as shown in Figures 1 to 3. The steps 330 through 346 of user 100 requesting a service from a website 110 of a web merchant and authorization server 120 verifying the calling card details, are as shown in Figure 2. Once the PIN has been validated by the calling card database 130 at 380, there is no need to return the DN in the database, if there is no billing operation. Instead, authorization server 120 merely returns at step 384 an indication of the validity of the PIN to website 110 of the web merchant. The web merchant can then have a degree of confidence in the identity of the user as long as the PIN is known only to the proper user.

Charity donations or political donations can be made by telephone or Internet more easily and administered more cheaply. There would be no need to give credit card numbers by phone, which is time consuming and may give rise to security fears on the part of the subscriber. A single call to solicit donations could be used to achieve authorization to bill the charge to the subscriber.

Many gambling applications can be envisaged. If there is no need for a subscriber to pre-register, it is easier for the subscriber, and there is less administration for the web merchant. Also, smaller transaction values can be handled more easily, and winnings can be paid more easily.

Many data provision services can benefit if casual customers could easily be charged a small or nominal amount. News services, newspapers, often provide some information for free, which must be subsidized from other sources of revenue. If they could be charged for, there would be more incentive to enhance such services, add more value and compete for more customers. Other examples of data services include weather information services, stock information, directory services, and so on.

Local household services such as deliveries of food items, take away food, or household maintenance such as window cleaning, could be ordered by phone and paid for in the same phone call. The same sort of services could be ordered and paid for over the Internet, with the charge appearing on the subscriber's phone or ISP bill.

The subscriber can set the rate if given a choice, e.g. by pressing keys to select different rates and/or categories of service each with different billing rates, or the telco could set the rate. The billing rate can be set by the web merchant, either by notifying the telco of the rate, or by choosing one of a number of fixed rates set by the telco. This could be achieved by the web merchant having different DNs corresponding to different fixed rates. The web merchant could choose which of its DNs to use for a given call.

The associated service can be provided in response to a request from the subscriber, or may be offered to the subscriber unsolicited.

At any point, for example when accessing the web merchants web page, the subscriber may be presented with options of paying by various means including credit card or telephone bill, or other utility bill.

The amount billed may be duration dependent, can be selected by DTMF input, can be data-volume dependent, or service dependent. An example of the latter is when the application is gambling, and the amount paid may depend on the outcome of the gamble. Services could be paid for by using pre-paid phone cards at appropriately equipped public telephone kiosks, or by calling cards. The rate for a given service can be predetermined by the web merchant, or can be set at the time of the call. This can enable on-line or telephone negotiation of price. If conference calls or on-line email/Internet conferences are set up, then auction sales can be conducted, with billing authorization, and actual billing all handled more easily. It can all be handled in the same call.

As IP telephony develops, calling cards and billing systems can be adapted to bill to a given IP address rather than a telephone number. In this case the calling card database referred to above can encompass a database which returns an IP address in response to calling card information.

The embodiments described above show the use of a LIDB-based calling card or a proprietary calling card for e-commerce or for validating purchases of goods or services. An encrypted cookie can be used to record the calling card number on the user's PC. These embodiments also show recording of the consumer's IP address and domain name in a validation database to allow purchases within a predefined time, e.g. - six hours, without re-entering the PIN. Using SSL to collect the calling card number and PIN is also shown, as is erasing or invalidating the cookie if the user cannot enter the PIN or calling card number correctly. Use of the calling card may be blocked if the user cannot enter the PIN or calling card number correctly. Switch billing records may be converted to EMI (Exchange Message Interface) format for e-commerce applications. Existing settlement arrangements for calling cards or telephone calls generally may be reused for e-commerce applications.

To summarize, described above is a method of authorizing a billing by a billing system of a telephone network, to a subscriber, for a service requested over the Internet, using a calling card. A line information database is accessed to obtain the telephone number corresponding to the calling card identifier, and the service is billed to that number. This puts existing telephone billing system and calling card infrastructure to a new use and provides a payment or authorization method that is easy to use and to deploy and bring to market on a large scale.

Other variations of the described embodiments, and other applications of the invention can be conceived and are intended to be within the scope of the claims. The above-described embodiments of the invention are intended to be examples of the present invention and alterations and modifications may be effected thereto, by those of skill in the art, without departing from the scope of the invention which is defined solely by the claims appended hereto.

Preferably, the method further comprises the steps of recording the calling card identifier, the billed number and associated telephone company information such as the revenue accounting office, etc ...at the billing server site.

Preferably, the method further comprises the steps of recording the calling card identifier, and using the recorded calling card identifier for authorizing a subsequent request by the same user for a service without the user needing to reenter the calling card identifier at the merchant site.

Preferably, the method further comprises the steps of recording an encrypted IP address of the user at the merchant site, and employing the recorded IP address for authorizing a subsequent request by the same user for a service without the user needing to reenter the calling card identifier to prevent fraud and reduce consumer friction right at the merchant's site.

Preferably, the method further comprises the steps of recording an encrypted calling card identifier of the user at the merchant site, and employing the recorded identifier for verifying against a stored calling card identifier in the consumer's browser for a subsequent request by the same user for a service without the user needing to reenter the calling card identifier to prevent fraud and reduce consumer friction right at the merchant's site.

Preferably, the method further comprises the steps of recording an encrypted calling card identifier of the user at the merchant site along with an encrypted IP address when a consumer was authenticated on a different site.

Preferably, the method further comprises the steps of recording the calling card identifier, the billed number and associated telephone company information such as the revenue accounting office, etc... and a transaction key at the billing server site.

Preferably, the method further comprises the steps of recording an encrypted transaction key inside the consumer's browser corresponding to the authentication of the consumer's calling card.

Preferably, the method further comprises the steps of recording an encrypted transaction key inside the consumer's browser corresponding to the authentication of the consumer's calling card billed number and the billing information at the billing server and merchant site.

Preferably, the method of ensuring that the consumer purchase is performed from an authenticated consumer is performed by retrieving the consumer's key from the browser to access the consumer's identity inside the merchant software.

Preferably, the method of purchasing at a merchant site is comprised of retrieving the consumer's identity from the merchant's software and securely passing it along to the billing system to record the transaction along with the purchase information containing information such as the merchant name, item name, quantity and other well known information required in electronic commerce against the consumer's authentication account.

Preferably, the method consists in passing this key back to the merchant software to produce an entry inside the merchant web server containing an encrypted version of the consumer's IP address and the transaction key itself.

Preferably, the method of ensuring that the consumer purchase is performed from an authenticated consumer is performed by checking the IP address recorded inside the merchant software as well as the IP address contained in the consumer's browser along with the transaction key.

Preferably, the method of purchasing at a merchant site is comprised of retrieving this key from the merchant software and securely passing it along to the billing system to record the transaction along with the purchase information.

Preferably, this information is received by the billing system and a record is produced containing the purchase information as well as the corresponding key.

Preferably, the purchase record is associated with the authentication record by means of the key to bill the consumer appropriately through the billed number recorded in the authentication record.

Preferably, the key is partly modified after each purchase and updated in the merchant software, but still corresponds to the consumer's browser's key to prevent malicious reuse.

Preferably, the method of producing the billing record verifies the modified key on every purchase to ensure that the same key is not reused maliciously.

Preferably, the merchant is notified of the success of the transaction after each purchase.

Preferably, the authorization of billing for the service can be limited to a specified duration or specified value.

Preferably, the step of causing the service to be billed comprises the step of sending an indication of the authorization to the web merchant. This can be encrypted or otherwise secured as appropriate, particularly if the web merchant then passes the indication of authorization on to the billing system, or if the web merchant only grants access to a user after successful authorization. Alternatively, the web merchant could use the authorization passively, in the sense of granting access to any consumer until the web merchant receives an indication of a failed authorization request. This can be appropriate to enable faster access for consumers, and simpler or higher volume processing by the web merchant, if only small amounts of revenue would be lost by the inability to bill those consumers whose authorization request failed.

Preferably, the step of causing the service to be billed comprises the step of sending an indication of the authorization to the billing system.

Preferably, the billing amount is determined according to input from a web merchant responsible for providing the service which allows a wider or more flexible range of services as the amount billed can be set accordingly.

Preferably, the billing amount is determined according to input from the subscriber which allows the introduction of more complex services with more options, or which allows negotiations on price and/or service to be introduced.

Preferably, the authorization can be in respect of a billing amount that is a credit which again enables a wider range of services. These services can include those that the web merchant desires from the subscriber, and is willing to pay for. For example, subscribers can be paid small amounts for completing on-line consumer surveys, or for receiving specific advertising. Gambling winnings payments, contract or salary payments, and refunds of earlier payments can also be made.

Preferably, the method further comprises the step of passing the authorized billing amount to a billing system of the network. This can be carried out by the network or by the web merchant or both. It can be carried out automatically, by the network, using information transmitted over the connection. Alternatively it can be carried out by a second connection made by the web merchant to the network or to the billing system directly. Such a connection can be made over a data network, or over signaling channels of a voice network without needing a voice channel to be set up.

In summary, the present invention provides for authorizing a billing by a billing system of a telephone network, to a subscriber, for a service requested over the Internet, using a calling card. A line information database is accessed to obtain the telephone number corresponding to the calling card identifier, and the service is billed to that number. This puts existing telephone billing system and calling card infrastructure to a new use and provides a payment or authorization method that is easy to use and to deploy and bring to market on a large scale.

## Claims

1. A method of authorizing a billing by a billing system of a telephone network, to an account of a subscriber of the telephone network, for a third party service requested by a user over the Internet, comprising the steps of:
a) receiving an identifier of a calling card of the user,
b) accessing a database of correspondences between telephone numbers and calling card identifiers, to obtain the telephone number corresponding to the calling card identifier,
c) causing the third party service to be billed by the billing system of the telephone network to the subscriber corresponding to the telephone number.

2. The method of claim 1, the database being a line information database accessible over a signaling network of the telephone network.

3. The method of claim 1 further comprising the step of determining if the calling card identifier is associated with a proprietary database of correspondences, and when it is, the accessing step comprises the step of interrogating the associated proprietary database.

4. The method of claim 1 further comprising the step of receiving a secure identifier, and the step of accessing the database comprises the step of using the secure identifier and the calling card identifier to obtain the telephone number.

5. The method of claim 1 further comprising the steps of recording the calling card identifier, and using the recorded calling card identifier for authorizing a subsequent request by the same user for a service without the user needing to re-enter the calling card identifier.

6. The method of claim 1 further comprising the steps of recording an IP address of the user, and using the recorded IP address for authorizing a subsequent request by the same user for a service without the user needing to reenter the calling card identifier.

7. The method of claim 6, the authorization of billing for the service being limited to a specified duration or specified value.

8. The method of claim 1, the step of causing the service to be billed comprising the step of sending an indication of the authorization to the web merchant.

9. The method of claim 1, the step of causing the service to be billed comprising the step of sending an indication of the authorization to the billing system.

10. , The method of claim 1, an amount of the billing being determined according to input from the web merchant.

11. The method of claim 1, an amount of the billing being determined according to input from the subscriber.

12. A method of operating as an Internet service provider to provide Internet users with access to sites on the Internet, and carrying out the billing authorization method as set out in claim 1.

13. Apparatus set up to carry out the method of claim 1.

14. Software suitable for carrying out the method of claim 1.

15. A method of using a billing system for a telephone network, for billing a subscriber to the telephone network, the billing relating to a service provided by a third party web merchant coupled to the network, the billing system being coupled to a calling card authorization server, the method comprising the steps by the network of:
receiving from the web merchant an indication of a billing amount, an indication of the identity of the subscriber,
receiving from the calling card authorization server an indication of whether a corresponding request for authorization to bill that amount, to pay for the service, was successful and
causing the billing amount to be billed to the subscriber, and a corresponding credit made to the web merchant by the billing system, if the authorization was successful.

16. A method of operating an Internet site to offer a service that is billable to a subscriber of a telephone network using a calling card of the subscriber, the telephone network having an associated billing system, the calling card being associated with a calling card database, the method comprising the steps of:
receiving a request for the service from a user,
obtaining an authentication of the user by using the calling card database to verify the calling card of the subscriber,
causing the billing system to bill the subscriber for the service, according to the result of the authentication.

17. Apparatus set up to carry out the method of claim 16.

18. A method of operating an Internet site offering a service that uses authentication by calling card, the method comprising the steps of:
receiving a request for the service from a user,
obtaining an authentication of the user by using a calling card database to verify a calling card of the user,
providing the service to the user depending on the result of the authentication.

19. Software suitable for carrying out the method of claim 18.

20. Apparatus set up to carry out the method of claim 18.

21. A method of using an Internet based service provided by a web merchant that uses authentication by calling card, comprising the steps of:
requesting the service,
sending an identifier of the calling card to enable the web merchant to obtain authentication, and
using the service for which authentication has been obtained.

22. A method of verifying identity of a user of an Internet based service, for a provider of the service, based on calling card information, comprising the steps of:
a) receiving an identifier of a calling card of the user, and a secure identifier of the user,
b) accessing a line information database of correspondences between telephone numbers, secure identifiers and calling card identifiers, to verify there is an entry in the database corresponding to the received secure identifier and the received calling card identifier,
c) indicating to the web merchant, the result of the access.

23. Apparatus set up to carry out the method of claim 22.

24. Software for carrying out the method of claim 22.

25. The method of claim 1 further comprising a step of encrypting information relating to the calling card of the user.

26. The method of claim 5 further comprising a step of encrypting information relating to the IP address of the user.

27. The method of claim 6 further comprising a step of encrypting information relating to the calling card of the user.

28. The method of claim 5 further comprising a step of verifying a subsequent request by the recorded information relating to the calling card.

29. The method of claim 6 further comprising a step of verifying a subsequent request by the recorded information relating to the IP address.

30. The method of claim 18 further comprising a step of encrypting information relating to the request, authentication and service by one or more digital keys.

31. The method of claim 30 further comprising steps of encrypting information relating to the request, authentication and service, and modifying digital keys after the service provided.

32. A system for providing a billing and/or billing authorization through a telephone network by the use of a calling card comprising:
a database containing information relating to the owner of the calling card;
an electronic transaction block for monitoring an electronic transaction between the owner of the calling card and a service provider;
a billing transfer block for transferring the electronic transaction to the database so that the account of the calling card can be altered in accordance with the electronic transaction.

33. The system of claim 32 further comprising an encryption block for encrypting the electronic transaction between the owner of the calling card and the service provider.
